# EUROPEAN PATENT APPLICATION

(11) **EP 4 834 070 A1**
(43) Date of publication of application: **04.11.2026**
(21) Application number: 26161014.1
(22) Date of filing: 26.02.2026
(51) Int. Cl.: A01B 69/04, A01B 79/00

(54) **ADAPTIVE COVERAGE REORDERING OF A WORK VEHICLE PLAN TO AVOID VIOLATIONS OF A VIRTUAL BOUNDARY OF A WORK AREA**

(30) Priority: 30.04.2025 US 202519194227
(71) Applicant: Deere & Company, Moline, IL 61265 (US)
(72) Inventor: PODUVAL, MANU, 68163 Mannheim (DE)
(74) Representative: Holst, Sönke

(57) **Abstract**

Systems and methods are provided for work vehicle guidance and/or automation within work areas having non-passable exterior boundaries. An initial work plan comprises reciprocating infield passes and circumferential headland passes, and defines a headland transition area wherein the work vehicle transitions between headland passes to perform an exterior pass prior to at least one interior headland pass. If no violations of the exterior boundary are predicted, the initial work plan is performed. If violations are predicted, based on kinematic analysis of the vehicle and any implements thereof, an adjusted work plan is generated. A starting point is predicted for each violation, wherein a reversal motion plan is generated from each respective starting point to a reversal point which is automatically ascertained to enable completion of the second headland pass without violation of the non-passable exterior boundary and to minimize an amount of duplicative coverage in the headland portion.

## Description

### FIELD OF THE DISCLOSURE

The present disclosure relates generally to a method and system for path planning, as well as operator guidance and/or automation of a work vehicle with respect to a restricted (e.g., impassable or non-traversable) boundary of a work area. More particularly, the present disclosure relates to adaptive coverage reordering of headland passes to avoid violations which would otherwise occur with respect to one or more virtual boundary areas of a work area being traversed by the work vehicle.

### BACKGROUND

A path planner may be used to determine one or more path plans for a self-propelled work vehicle to cover a work area. The work area may for example represent a field for growing a crop or other vegetation. The work vehicle may need to traverse the entire work area or a portion thereof to plant a crop, to treat a crop, to harvest a crop, or to perform another task associated with the crop or vegetation, to name non-limiting examples.

In conventional systems, particularly with respect to autonomous applications, a consistent problem typically occurs during headland maneuvers where the respective paths of the work vehicle and/or work implement violate a defined exterior boundary of the work area. Such violations may be particularly likely where the shape of the boundary is irregular (e.g., narrow projections of the boundary into the field, consecutive sharp turns) or otherwise inconsistent with work vehicle and/or work implement dimensions and kinematics. The exterior boundary may for example be a digital/ virtual fence created by GPS points and associated user input. This leads to imprecise operations and in some instances even violations of local regulations and other requirements. However, efforts to completely eliminate violations of the defined exterior boundary may further cause duplicative coverage, or runover damage, with respect to the work area.

### BRIEF SUMMARY

The current disclosure provides an enhancement to conventional systems, at least in part by introducing a novel system and method for adaptively reordering path coverage and better utilizing the available space to adjust work vehicle maneuvers to mitigate digital fence violations.

According to one exemplary embodiment as disclosed herein, a computer-implemented method is provided for guidance and/or automation for a self-propelled work vehicle operating within a defined work area having a non-passable exterior boundary. An initial work plan is generated comprising a plurality of reciprocating and adjacent infield passes across an interior portion of the defined work area and a plurality of circumferential and adjacent headland passes about a headland portion of the defined work area which surrounds the interior portion. The initial work plan defines a headland transition area wherein the work vehicle is to transition from a first headland pass to a second headland pass adjacent to the non-passable exterior boundary, prior to performance of the first headland pass, and further wherein the work vehicle is to transition from the second headland pass to the first headland pass for performance of the first headland pass upon completion of the second headland pass.

The method includes predicting whether one or more violations of the non-passable exterior boundary will occur in accordance with the initial work plan, based on at least a kinematic model associated with one or more vehicle motion characteristics. Upon predicting no violations of the non-passable exterior boundary in accordance with the initial work plan, one or more output signals are automatically generated to direct performance of the initial work plan by the work vehicle.

Upon predicting one or more violations of the non-passable exterior boundary in accordance with the initial work plan, the method further includes automatically generating an adjusted work plan including the headland transition point and further comprising: predicting at least a respective starting point for each of the one or more violations; for each of the one or more violations, generating at least one reversal motion plan from the respective starting point to a further defined reversal point, wherein the reversal point is automatically ascertained to enable subsequent motion of the work vehicle to complete the second headland pass without violation of the non-passable exterior boundary and to minimize an amount of duplicative coverage in the headland portion; and automatically generating one or more output signals to direct performance of the adjusted work plan by the work vehicle.

In an exemplary and optional aspect according to the above-referenced method embodiment, the one or more output signals may be generated at least in part to a display unit for guiding manual control of performance of the initial work plan or the adjusted work plan by the work vehicle.

In another exemplary and optional aspect according to the above-referenced method embodiment, the one or more output signals may be generated at least in part to one or more vehicle control units for automatic control of performance of the initial work plan or the adjusted work plan by the work vehicle.

In another exemplary and optional aspect according to the above-referenced method embodiment, the one or more output signals may be generated for guiding manual control during the at least one reversal motion plan, and for automatic control during the remaining portions of the initial work plan or the adjusted work plan.

In another exemplary and optional aspect according to the above-referenced method embodiment, the one or more vehicle motion characteristics may comprise a minimum turn radius, one or more physical dimensions of the work vehicle, and a velocity of the work vehicle.

In another exemplary and optional aspect according to the above-referenced method embodiment, a work implement is associated with the work vehicle, and the one or more vehicle motion characteristics may further comprise a minimum turn radius and one or more physical dimensions of the work implement.

In another exemplary and optional aspect according to the above-referenced method embodiment, the kinematic model may be iteratively trained over time to correlate historical input data sets comprising monitored vehicle motion characteristics and boundary characteristics with observed violations of an associated boundary.

In another exemplary and optional aspect according to the above-referenced method embodiment, for at least one of the one or more violations, another reversal motion plan may be generated from the respective ending point to a second reversal point, wherein the second reversal point may be automatically ascertained to enable subsequent motion of the work vehicle to complete the second headland pass without violation of the non-passable exterior boundary and to minimize an amount of duplicative coverage in the headland portion.

In another exemplary and optional aspect according to the above-referenced method embodiment, virtual contours associated with the non-passable exterior boundary may be predefined in an electronic map.

In another exemplary and optional aspect according to the above-referenced method embodiment, virtual contours associated with the non-passable exterior boundary may be defined according to user-provided inputs from a user interface.

In another embodiment according to the present disclosure, a system is provided for guidance and/or automation for a self-propelled work vehicle operating within a defined work area having a non-passable exterior boundary, and comprises one or more processors functionally linked to one or more sensors associated with the work vehicle and configured to generate output signals representing vehicle motion characteristics. The one or more processors are configured to direct the performance of steps according to the above-referenced method embodiment and optionally one or more of the exemplary aspects thereof.

In another embodiment according to the present disclosure, a self-propelled work vehicle is provided which includes a system for guidance and/or automation for a self-propelled work vehicle operating within a defined work area having a non-passable exterior boundary, and comprises one or more processors functionally linked to one or more sensors associated with the work vehicle and configured to generate output signals representing vehicle motion characteristics. The one or more processors are configured to direct the performance of steps according to the above-referenced method embodiment and optionally one or more of the exemplary aspects thereof.

Numerous objects, features and advantages of the embodiments set forth herein will be readily apparent to those skilled in the art upon reading of the following disclosure when taken in conjunction with the accompanying drawings.

### BRIEF DESCRIPTION OF THE DRAWINGS

Fig. 1 is a block diagram representing a work vehicle control system according to the present disclosure.
Fig. 2 is a flowchart representing an exemplary method according to the present disclosure.
Fig. 3 is a graphical diagram representing an exemplary initial work plan according to the present disclosure.
Fig. 4 is a graphical diagram representing an exemplary adaptive coverage reordering step according to the present disclosure.
Fig. 5 is a graphical diagram representing an exemplary reversal motion plan in response to a predicted violation according to the present disclosure.
Fig. 6 is a graphical diagram representing an exemplary transition plan following the reversal motion plan for minimizing duplicative coverage according to the present disclosure.
Fig. 7 is a graphical diagram representing an exemplary maneuver to avoid exterior boundary violations in response to the transition plan according to the present disclosure.
Fig. 8 is a graphical diagram representing a reserved space in the headland area for headland pass transitions according to an adjusted work plan of the present disclosure.

### DETAILED DESCRIPTION

With reference herein to the representative figures, various embodiments may now be described for an inventive system and method.

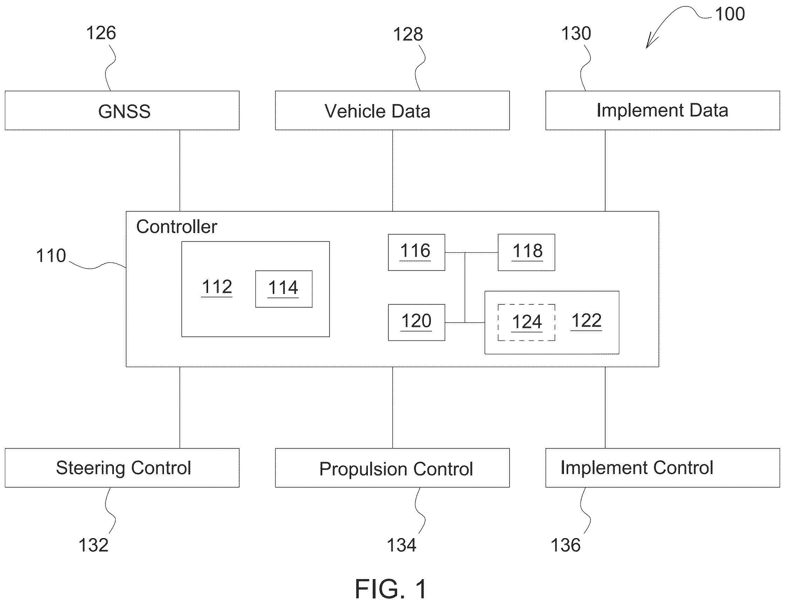

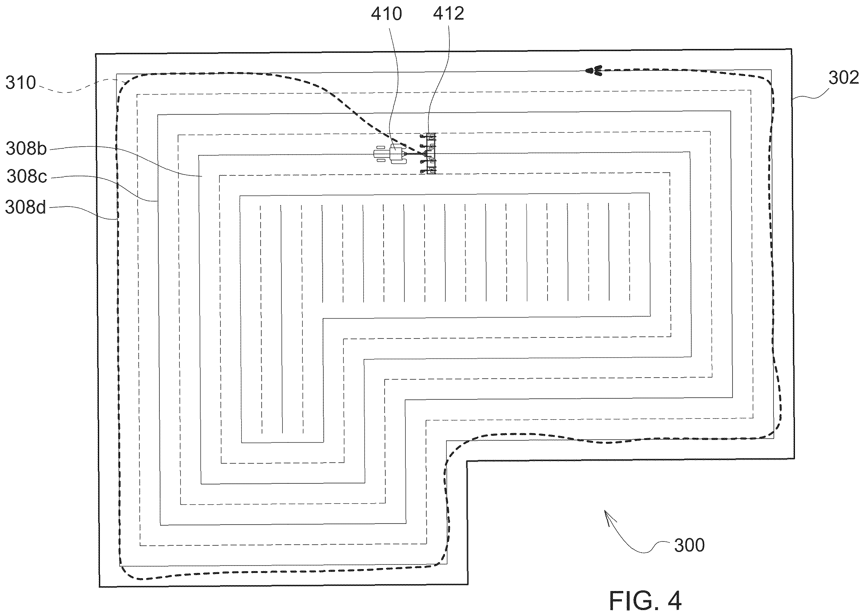

Fig. 1 in a particular embodiment as disclosed herein shows a system 100 for planning, guidance, and/or control of the path of a work vehicle (not shown in Fig. 1, but further referenced as 410 in Fig. 4) relative to defined boundaries of a work area. The work vehicle as discussed herein for illustrative purposes may be a tractor, but is not limited thereto unless otherwise specifically noted herein. The work vehicle may for example be configured to draw, push, or otherwise have mounted thereon or integrated therewith a work implement for working or treating the work area. The work vehicle and the work implement may collectively define a work machine configured to perform any of an array of work functions as conventionally known in the art such as for example harvesting, planting, spraying, or the like.

The system 100 as illustrated includes a controller 110 which may be configured to produce outputs, as further described below, to a user interface 112 associated with a display unit 114 for display to a human operator (assuming a human operator is operating the work vehicle, which may otherwise for example be autonomous in various embodiments of a system and/or method as disclosed herein). The controller 110 may be configured additionally or in the alternative to produce outputs to a display unit independent of the user interface 112 such as for example a mobile device associated with the operator or a remote display unit independent of the work vehicle. The controller 110 may be configured to receive inputs from the user interface 112, such as user input provided via the user interface 112. Not specifically represented in Figure 1, the controller 110 may in some embodiments further receive inputs from remote devices associated with a user via a respective user interface, for example a display unit with touchscreen interface. Data transmission between for example the vehicle controller 110 and a remote user interface may take the form of a wireless communications system, a server network, or the like, and associated components as are conventionally known in the art. In certain embodiments, a remote user interface and vehicle control systems for respective work vehicles may be further coordinated or otherwise interact with a remote server or other computing device for the performance of operations in a system 100 as disclosed herein.

The controller 110 may for example include or be associated with a processor 116, a computer readable medium 118, a communications unit 120, data storage 122 which for example may include a database network, and the aforementioned user interface 112 (for example as part of an onboard vehicle control panel or otherwise discretely disposed) having a display 114. An input/output device, such as a keyboard, joystick, touch screen, or other user interface tool, may be provided so that the human operator may input instructions to the controller 110. It may be understood that the controller 110 described herein may be a single controller having all of the described functionality, or it may include multiple controllers wherein the described functionality is distributed among the multiple controllers.

Various operations, steps or algorithms as described in connection with the vehicle controller 110 can be embodied directly in hardware, in a computer program product such as a software module executed by the processor 116, or in a combination of the two. The computer program product can reside in RAM memory, flash memory, ROM memory, EPROM memory, EEPROM memory, registers, hard disk, a removable disk, or any other form of computer-readable medium 118 known in the art. An exemplary computer-readable medium can be coupled to the processor such that the processor can read information from, and write information to, the memory/ storage medium. In the alternative, the medium can be integral to the processor. The processor and the medium can reside in an application specific integrated circuit (ASIC). The ASIC can reside in a user terminal. In the alternative, the processor and the medium can reside as discrete components in a user terminal.

The term "processor" as used herein may refer to at least general-purpose or specific-purpose processing devices and/or logic as may be understood by one of skill in the art, including but not limited to microprocessor, microcontroller, state machine, central processing unit, neural processing unit, graphical processing unit, and the like, including various combinations thereof.

The communication unit 120 may support or provide communications between the controller and external systems or devices, and/or support or provide communication interface with respect to internal components of the work vehicle. The communications unit may include wireless communication system components (e.g., via cellular modem, WiFi, Bluetooth or the like) and/or may include one or more wired communications terminals such as universal serial bus ports.

The data storage 122 in an embodiment may for example be configured to receive and store kinematic models 124 as further described herein. The data storage 122 may further or alternatively be configured to receive and store real-time and/or historical data sets regarding work vehicle characteristics, kinetics, position, and the like, and/or generated plans including assigned pass sequences, turn types, work area/ field boundary parameters, and the like in selectively retrievable form, for example as inputs for developing the kinematic models 124 as may be used for generating plans based on future input data sets. Data storage as discussed herein may, unless otherwise stated, generally encompass hardware such as volatile or non-volatile storage devices, drives, memory, or other storage media, and in some embodiments one or more databases residing thereon.

The system 100 of Fig. 1 may include or otherwise associated with a group of sensors or other data sources functionally linked to the controller 110. One example of sensors or other data sources may include a global navigation satellite system (GNSS) transceiver 126 or other equivalent for providing signals corresponding to work vehicle position. Another example of sensors or other data sources may include work vehicle data sources 128 which provide or enable access to vehicle data, such as for example physical characteristics and/or operating parameters of the work vehicle. Another example of sensors or other data sources may include work implement data sources 130 which provide or enable access to work implement data, such as for example physical characteristics and/or operating parameters of the work implement.

The controller 110 may have integrated therein or otherwise communicate with (e.g., generate output signals to) a steering control unit 132, a propulsion control unit 134, an implement control unit 136, and/or any other vehicle control unit relevant to the particular work vehicle or applications thereof. Such control units and respective functions, among others, may be discrete in nature or otherwise combined in various embodiments without departing in any way from the scope of the present disclosure.

The controller 110 may generate output signals corresponding to display and/or automatic control of various operations of the work vehicle consistent with a generated path plan, which may be an initial path plan or a revised path as discussed further herein for example to avoid traverse of a restricted boundary. The controller 110 may generate control signals for any or all of the steering control unit 132, the propulsion control unit 134, the implement control unit 136, and/or any other component or system that is/are consistent with tracking a vehicle path and subject to modification or interruption by the system 100 or another system. For example, control signals may comprise a steering control signal or data message that defines a steering angle of the steering shaft, a braking control signal or data message that defines the amount of deceleration, hydraulic pressure, or braking friction to the applied to brakes, a propulsion control signal or data message that controls a transmission state, a throttle setting, a fuel flow, a fuel injection system, vehicular speed, or vehicular acceleration. Further, where the work vehicle may be propelled by an electric drive or electric motor, the propulsion control signal may control or modulate electrical energy, electrical current, electrical voltage provided to an electric drive or motor. The control signals generally vary with time as necessary to track the path plan.

The lines that interconnect the components of the system 100 may comprise logical communication paths, physical communication paths, or both. Logical communication paths may comprise communications or links between software modules, instructions or data, whereas physical communication paths may comprise transmission lines, data buses, or communication channels, to name non-limiting examples.

The steering control unit 132 may comprise or otherwise interact with an electrically controlled hydraulic steering system, an electrically driven rack and pinion steering, an Ackerman steering system, or another steering system. The propulsion control unit 134 may comprise or otherwise interact with an internal combustion engine, an internal combustion engine-electric hybrid system, an electric drive system, or the like.

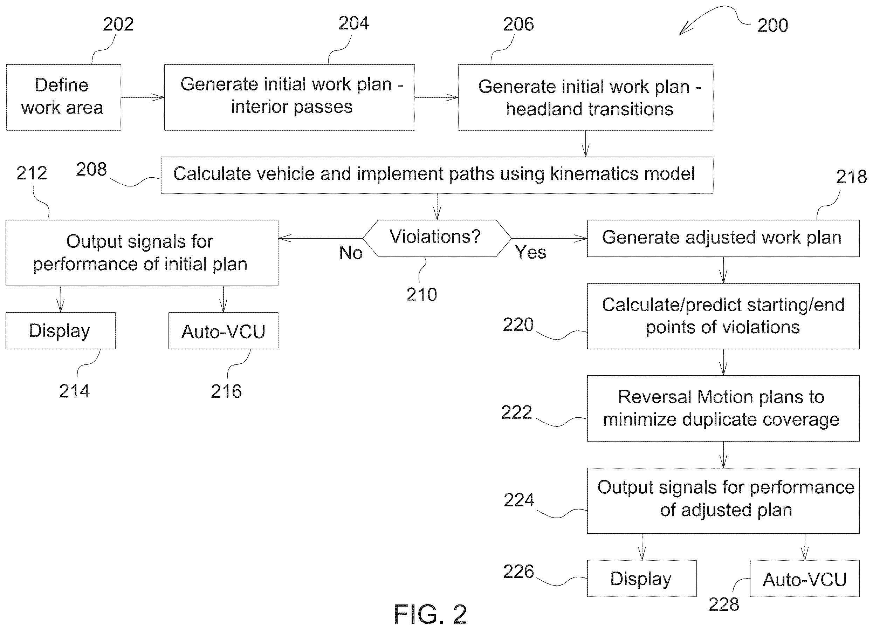

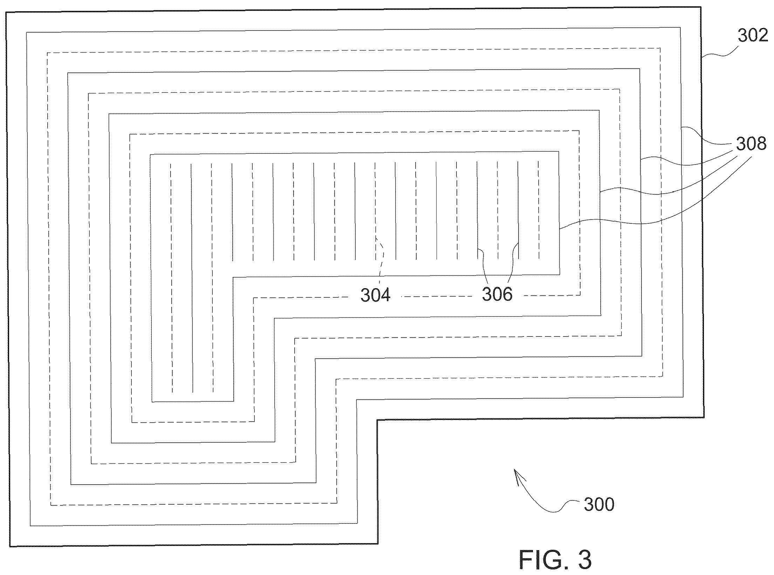

Referring to Fig. 2, with further reference to Figs. 3- 8 for illustrative purposes, a method 200 of planning and implementing work vehicle paths with respect to a defined work area may next be described.

A work area may be defined as an initial step 202 with respect to the controller 110, for example but not necessarily using direct user input via user interface 112. In an embodiment, the work area may be predetermined and uploaded or otherwise obtained from a remote data source prior to or otherwise in association with a work operation. In an embodiment, an initial electronic map associated with the work area may be provided and capable of dynamic alteration by an operator or other authorized user to define boundaries, contours, or other relevant parameters of the work area, wherein such alterations may at least be locally and temporarily saved by the controller 110 for application in association with methods as further described herein.

The user interface 112 may be configured to receive user input for defining a work area 300 such as for example shown in Fig. 3 as including a non-passable exterior field boundary 302 and one or more passable interior field boundaries 308. Various reference points, user-selectable or otherwise, for the various boundaries and other relevant parameters of the work area may be created in an electronic map for example using global navigation satellite system (GNSS) coordinates, may be provided in real time from inputs generated by a work machine tracing the boundaries, or in some embodiments via selection from among various predetermined work areas in a stored library thereof, but these examples are not intended as being limiting on the scope of the present disclosure.

The non-passable exterior boundary 302 may be virtual or otherwise digitally defined and is in no way limited to non-passable physical boundaries such as for example walls, fences, or the like, although the exterior boundary may also include such physical boundaries in whole or in part where appropriate.

Passable boundaries 308 may for example include headland boundaries defined based on input offset values with respect to one or more contours of a previously defined exterior field boundary 302, wherein a headland region is defined in between. For example, a constant offset may be applied across the entirety of an exterior field boundary 302, or individual offsets (e.g., top and bottom offsets) may be applied to respective contours of the exterior field boundary 302. In various embodiments, including embodiments as further describe herein for illustrative purposes, headland boundaries may be generally defined as passable boundaries 308 for the work vehicle, whereas the exterior field boundaries 302 may be generally defined as impassable.

The method 200 may continue with generation of an initial work plan, for example in step 204 with respect to a plurality of reciprocating and adjacent infield passes 306 across an interior portion 304 of the defined work area 300 and further in step 206 with respect to a plurality of circumferential and adjacent headland passes 308 about a headland portion of the defined work area which surrounds the interior portion. The initial work plan may for example direct execution of the infield passes 306 for coverage of the interior portion 304 according to various conventional techniques, including any number of end-of-pass turn types as may be appropriate for the work vehicle and/or associated work implement. Execution of the infield passes 306 is not limited to sequential performance of adjacent passes, but may for example include performance of non-adjacent passes with one or more intervening passes there between within the scope of the present disclosure.

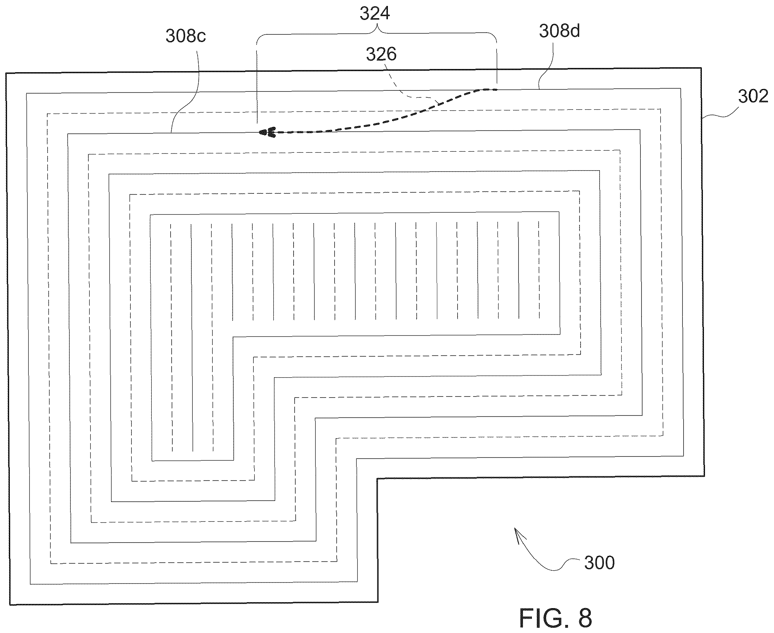

With further illustrative reference to Fig. 4, the generation of the initial work plan, at least with respect the headland passes in step 206, may include defining a reserved space 324 (see Fig. 8) in the headland area proximate to which the work vehicle 410 is directed to perform a first headland transition 310 from an interior headland pass (e.g., the second illustrated headland pass 308b) to another headland pass (e.g., the fourth illustrated headland pass 308d) adjacent to the non-passable exterior boundary 302, prior to performance of the interior headland pass 308b, or at least prior to completion thereof.

The method 200 may continue with calculating, determining, and/or predicting a work path of the work vehicle 410 and associated work implement 412 in step 208 based on the generated work plan, for example assuming substantially continuous forward traverse and operation throughout the work plan, and further determining and/or predicting in step 210 whether the current work path of the work vehicle 410 and/or work implement 412 will violate the non-passable exterior boundary 302.

As used herein, the term "violate" may refer to the crossing, intersection, impingement, or the like with respect to any portion of the defined non-passable exterior boundary 302 by the work vehicle 410 and/or the work implement 412, in part or in their respective entirety.

In predicting whether one or more violations of the non-passable exterior boundary will occur in accordance with the initial work plan, the system 100 may selectively retrieve and make reference to or otherwise utilize a kinematic model 124 associated with one or more vehicle motion characteristics. Motion characteristics within the scope of the present disclosure may for example include without limitation a minimum turn radius, one or more physical dimensions, a velocity, and the like. In an embodiment, one or more kinematic models 124 may be predetermined and retrievable for a given work vehicle and/or work implement configuration, for a given work area type or configuration, or the like. Alternatively, or in addition, one or more kinematic models 124 may be iteratively trained over time to correlate historical input data sets including for example monitored vehicle motion characteristics and boundary characteristics with observed violations of an associated boundary. Observed violations may include manual input via a user interface, and/or automatically detected violations, being correlated with contemporary input data sets as feedback for training the respective model.

In carrying out the step 208 for calculating, determining, and/or predicting the work path of the work vehicle 410 and associated work implement 412, a system 100 as disclosed herein may obtain, for example by retrieving from data storage 122 or receiving from a sensor system 126, 128, 130, values for work vehicle characteristics, work vehicle kinetics, work vehicle position/ location/ orientation, work implement characteristics, work implement kinetics, work implement position/ location/ orientation, and the like. Work vehicle characteristics may include structural characteristics defining capabilities of the work vehicle 410 such as for example a minimum turn radius, a wheel angle rate, and the like. Such characteristics may be permanent in nature based on the structure of the work vehicle 410, or may be dependent at least in part on a configuration of the work vehicle 410 which is not permanent but based on a type of the work implement 412 mounted thereupon or otherwise associated therewith, a type of work being performed, etc. Work vehicle kinetics may for example include an advance speed of the work vehicle 410 as well as potentially any kinetics or limitations thereon associated with the work implement 412. The system 100 may further monitor or otherwise consider work conditions such as for example a terrain or other features being worked by the work vehicle 410, weather conditions, or the like.

As previously described, in carrying out step 210, the system 100 may consider a current path such as for example as provided in a work plan for the work vehicle 410 and proactively determine that the work plan will cause the work vehicle 410 to violate a non-passable exterior boundary 302. In addition, in some embodiments the system 100 may monitor a current path and/or trajectory of the work vehicle 410 during or even throughout operation of the work plan and determine that the work vehicle 410 is now projected to violate the non-passable exterior boundary 302 where such a violation was not previously predicted. Such a determination may for example result from changes to the current work conditions and/or configuration/ characteristics of the work vehicle 410, changes to the configuration of the work area 300, etc.

If a work vehicle path according to the initial work plan is not determined or predicted to result in any violations of a non-passable exterior boundary 302 by the work vehicle 410 and/or work implement 412 (e.g., "no" in response to the query in step 210), the method 200 as illustrated may proceed to step 212 with the generation of output signals corresponding to and for performance of the work plan. Such output signals may for example as represented in step 214 take the form of signals to display unit 114 or another display unit associated with an operator for manual performance of the various operations associated with the work plan. Such output signals may also or in the alternative and for example as represented in step 216 take the form of control signals to one or more control units associated with the work vehicle and/or work implement for automated performance of one or more various operations associated with the work plan.

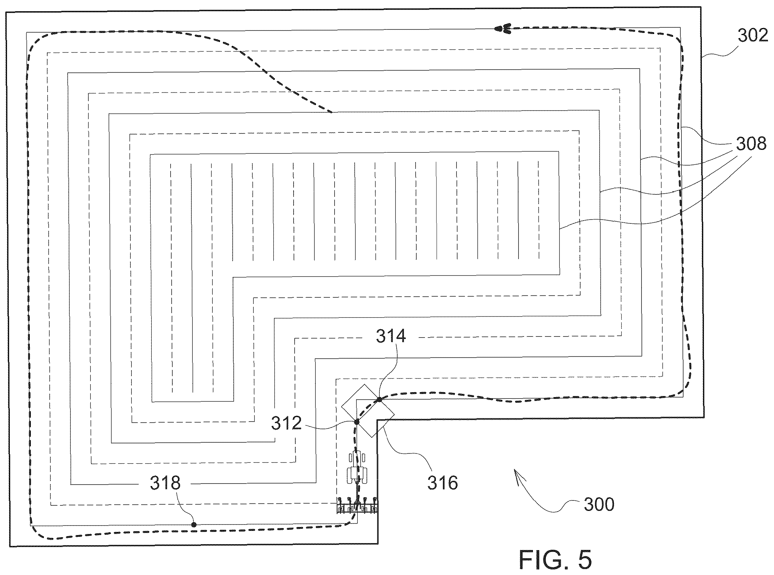

If the work vehicle path according to the initial work plan is however determined or predicted to violate one or more portions of a non-passable exterior boundary 302 by the work vehicle 410 and/or work implement 412 (e.g., "yes" in response to the query in step 210), as for example illustrated in Fig. 5, the method 200 may continue in step 218 by automatically generating an adjusted work plan. As represented in Fig. 5, in an embodiment according to the present disclosure a violation may be predicted wherein the system generates a virtual field 316, such as for example shaped like a polygon and corresponding substantially to a space expected to be occupied by the work vehicle 410 and/or work implement 412 based on the respective motion characteristics thereof.

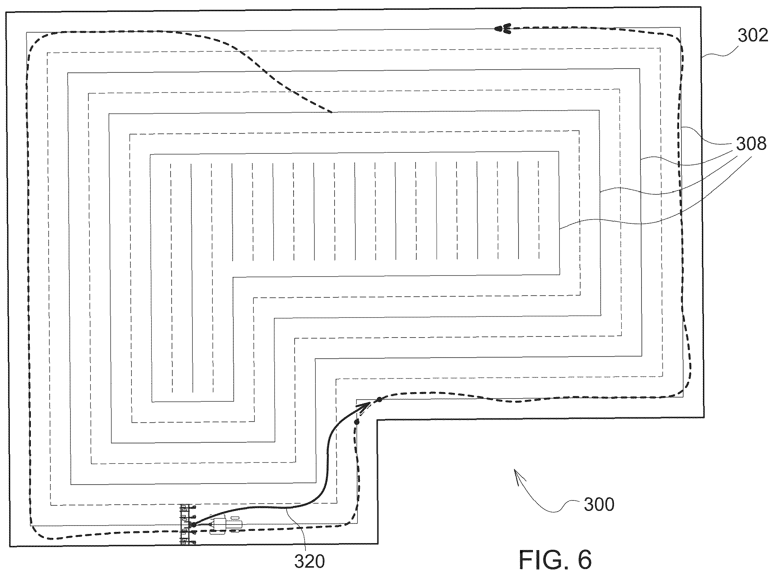

As represented in Fig. 5, for each instance where the generated virtual field 316 is predicted to violate the non-passable exterior boundary 302, the system 100 may further in step 220 calculate or predict at least a respective starting point 312 and optionally further an ending point 314 for the predicted violation. The method 300 may continue in step 222 with generation, for each of the predicted violations, of a reversal motion plan from the respective starting point 312 to a further defined reversal point 318. The reversal point 318 may for example be automatically ascertained to enable subsequent motion of the work vehicle (as represented in Fig. 6) to travel from the reversal point 318 to the respective ending point 314 along a generated transition path 320 without violation of the non-passable exterior boundary 302, and optionally to further minimize an amount of duplicative coverage and corresponding overrun damage in the headland portion.

It should be noted that the transition path 320 as shown in Fig. 6 is merely illustrative and not limiting on the scope of potential paths that may be generated and implemented between the reversal point 318 and the ending point 314 for a given violation and in accordance with the present disclosure. For example, the transition path 320 may take any number of forms depending on the work vehicle characteristics, work implement characteristics, work conditions, and the like, such that the work vehicle 410 is capable of executing the transition path 320 while satisfying any predetermined conditions such as for example optimization parameters, minimization of duplicative coverage, etc.

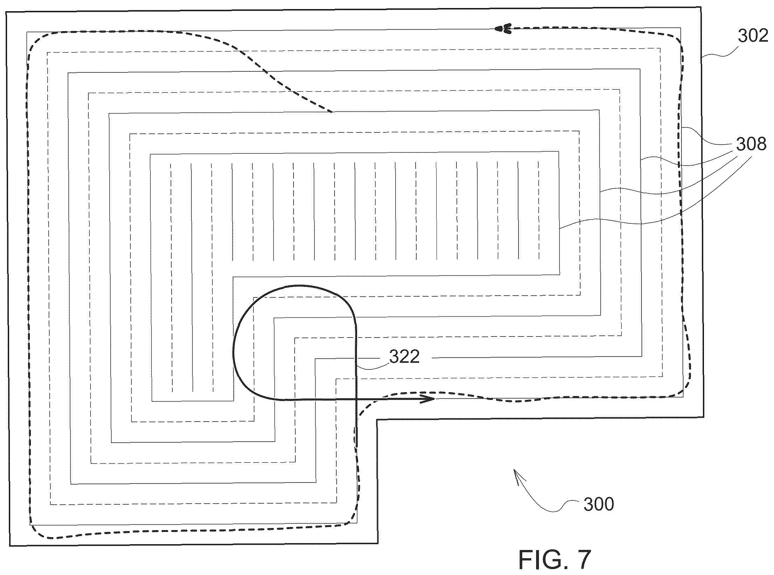

As represented in Fig. 7, in some embodiments a further transition path 322 may be generated to link the previous transition path 320 with the continuation of the exterior headland pass 308d, while traveling in a forward direction and continuing to prevent a violation of the non-passable exterior boundary 302. While one example of such a further transition path 322 is illustrated, it may be understood that the system 100 may be able to automatically select from a plurality of predetermined paths (e.g., a sequence of turns and forward/ reverse advances along defined tracks) based on the determined work vehicle characteristics, work vehicle kinetics, work conditions, and the like. In various embodiments, such a library of predetermined paths may alternatively be unavailable for review and selection, wherein the system 100 is configured to dynamically generate an optimal further transition path 322 to suit the parameters of the current situation. For example, it may be understood that any number of turns and/or forward/ reverse advance combinations may be applicable by the system 100 for a given further transition path 322, optionally dependent on any one or more of work vehicle characteristics, work implement characteristics, work state, work area conditions, work area contours, etc.

As further represented in Fig. 8, the adjusted work plan may include a reserved space 324 in the headland area for headland pass transitions 326 to complete the work operation. As previously noted, the work vehicle may in accordance with the adjusted work plan transition from an interior headland pass 308b to the exterior headland pass 308d. Upon approaching the reserved space 324 and accordingly completion of the exterior headland pass 308d without violation of the non-passable exterior boundary 302, also as previously disclosed, the adjusted work plan may direct the work vehicle to execute a headland pass transition 326 from the exterior (in this case, fourth from the interior) headland pass 308d to an adjacent (in this case, third from the interior) headland pass 308c. Upon once again approaching the reserved space 324 and accordingly completion of the third headland pass 308c, the adjusted work plan may then direct the work vehicle to transition to coverage of the reserved area 324 itself and subsequently exit from the work area altogether. Such a sequence may preferably provide maximum work area coverage with minimal duplication and further avoiding violations of the non-passable exterior boundary 302.

In an embodiment, a transition path 320 and/or further transition path 322 for any given predicted violation may be manually selectable by an operator or other authorized user from a library of vehicle paths. The system 100 may in an embodiment only present a subset of all vehicle paths as being available for user selection based on any one or more of work vehicle characteristics, work implement characteristics, work state, work area conditions, work area contours, etc.

With an adjusted work plan having been generated, including any reversal motion plans and associated transition paths as previously described, the method 200 may continue by automatically generating output signals (step 224) to the user interface 112 or other device with an appropriate display unit 114 for displaying relevant details of the adjusted work plan for operator execution (step 226) or automatically generating output signals to relevant control units associated with the control system 100 of the work vehicle 410 for performing the adjusted work plan (step 228).

In various embodiments, an adjusted work plan, including selection of one or more transition vehicle paths as described above, may for example be made based upon one or more specified quality metrics using executed optimization routines and corresponding models which may be predetermined or developed over time, extracted from data storage based on dynamic input data sets, and the like. Quality metrics may be specified for a given work cycle based on a type of work vehicle, type of work implement, work operation, and the like. Exemplary quality metrics may include optimization of a work vehicle footprint, such as reducing an amount of work area traversed or an amount of a particular portion of the work area traversed for at least a current work vehicle path, and/or optimization of work coverage by the work vehicle or a plurality of work vehicles including the work vehicle, such as minimizing an amount of duplicative coverage. Optimization routines may in various embodiments further account for various current work vehicle motion characteristics, work conditions, cost parameters, time parameters, operator parameters, and the like.

In various embodiments, an adjusted work plan or select portions thereof may be dynamically generated based on a best fit analysis with respect to the contours of the work area, further in view of the work vehicle motion characteristics and operating parameters, work conditions, and other relevant parameters at a given time. In other words, the shape, turn radius, points of traverse, and other characteristics of a generated path may vary for a given work area, or even for given passes/ track paths within the work area, based on current conditions and a dynamically determined best fit for the work vehicle for optimizing the work vehicle footprint, work coverage, and the like. In an embodiment, the best fit implementation is not limited to any one predetermined turn type or sequence but may involve a best fit analysis with respect to any of one or more available turn types to determine a best fit for a given pass and with respect to contours of the work area, even if a predetermined type of turn may otherwise be selected or programmed as a default. The best fit analysis may for example be performed for each available turn type with respect to an optimization routine to minimize duplicative traverse, and/or an amount of the work area traversed, while remaining within external contours of the work area. Such a routine may be predetermined or may be developed over time based on correlation of stored input data sets for each of various types of turns and corresponding operating parameters with respect to different outcomes such as violations, duplication of work area coverage, and the like.

In an embodiment, generation and implementation of an adjusted work vehicle plan by a first work vehicle may further be accompanied by communication of the adjusted work vehicle plan or various aspects thereof to one or more other work vehicles associated with the work area or a central communications hub with respect thereto, for example to facilitate routing of any additional work vehicles to avoid duplicative traversal of the work area, to facilitate generation of subsequent adjusted work vehicle plans for work vehicles travelling along parallel or otherwise proximate current vehicle paths, to inform the work vehicles of determined changes in the boundary or work conditions, and the like. In certain embodiments, a corresponding nature of current vehicle paths for a plurality of work vehicles working in the same work area may further influence the generation of an adjusted work vehicle plan for any one or more of the work vehicles, as for example the adjusted work vehicle plan may be generated to avoid overlap or otherwise interference with vehicle paths associated with any of the other work vehicles in the work area.

As used herein, the phrase "one or more of," when used with a list of items, means that different combinations of one or more of the items may be used and only one of each item in the list may be needed. For example, "one or more of" item A, item B, and item C may include, for example, without limitation, item A or item A and item B. This example also may include item A, item B, and item C, or item B and item C.

One of skill in the art may appreciate that when an element herein is referred to as being "coupled" to another element, it can be directly connected to the other element or intervening elements may be present.

Thus, it is seen that the apparatus and methods of the present disclosure readily achieve the ends and advantages mentioned as well as those inherent therein. While certain preferred embodiments of the disclosure have been illustrated and described for present purposes, numerous changes in the arrangement and construction of parts and steps may be made by those skilled in the art, which changes are encompassed within the scope and spirit of the present disclosure as defined by the appended claims. Each disclosed feature or embodiment may be combined with any of the other disclosed features or embodiments.

## Claims

1. A computer-implemented method (200) of guidance and/or automation for a self-propelled work vehicle (410) operating within a defined work area (300) having a non-passable exterior boundary (302), the method comprising:
generating an initial work plan (204, 206) comprising a plurality of reciprocating and adjacent infield passes (306) across an interior portion (304) of the defined work area and a plurality of circumferential and adjacent headland passes (308) about a headland portion of the defined work area which surrounds the interior portion;
wherein the initial work plan defines a headland transition area wherein the work vehicle is to transition from a first headland pass to a second headland pass adjacent to the non-passable exterior boundary, prior to performance of the first headland pass, and further wherein the work vehicle is to transition from the second headland pass to the first headland pass for performance of the first headland pass upon completion of the second headland pass;
predicting whether one or more violations (210) of the non-passable exterior boundary will occur in accordance with the initial work plan, based on at least a kinematic model (124) associated with one or more vehicle motion characteristics;
upon predicting no violations of the non-passable exterior boundary in accordance with the initial work plan, automatically generating one or more output signals (212) to direct performance of the initial work plan by the work vehicle;
upon predicting one or more violations of the non-passable exterior boundary in accordance with the initial work plan:
further automatically generating an adjusted work plan (218) including the headland transition point and further comprising:
predicting at least a respective starting point (220) for each of the one or more violations;
for each of the one or more violations, generating at least one reversal motion plan (222) from the respective starting point to a further defined reversal point, wherein the reversal point is automatically ascertained to enable subsequent motion of the work vehicle to complete the second headland pass without violation of the non-passable exterior boundary and to minimize an amount of duplicative coverage in the headland portion; and
automatically generating one or more output signals (224) to direct performance of the adjusted work plan by the work vehicle.

2. The computer-implemented method of claim 1, wherein the one or more output signals are generated (214, 226) at least in part to a display unit for guiding manual control of performance of the initial work plan or the adjusted work plan by the work vehicle.

3. The computer-implemented method of claim 1, wherein the one or more output signals are generated (216, 228) at least in part to one or more vehicle control units for automatic control of performance of the initial work plan or the adjusted work plan by the work vehicle.

4. The computer-implemented method of claim 3, wherein the one or more output signals are generated for guiding manual control during the at least one reversal motion plan, and for automatic control during the remaining portions of the initial work plan or the adjusted work plan.

5. The computer-implement method of claim 1, wherein the one or more vehicle motion characteristics comprise a minimum turn radius, one or more physical dimensions of the work vehicle, and a velocity of the work vehicle.

6. The computer-implement method of claim 5, wherein a work implement (412) is associated with the work vehicle, and wherein the one or more vehicle motion characteristics further comprise a minimum turn radius and one or more physical dimensions of the work implement.

7. The computer-implement method of claim 1, comprising:
iteratively training the kinematic model over time to correlate historical input data sets comprising monitored vehicle motion characteristics and boundary characteristics with observed violations of an associated boundary.

8. The computer-implemented method of claim 1, comprising:
for at least one of the one or more violations, generating another reversal motion plan from the respective ending point to a second reversal point;
wherein the second reversal point is automatically ascertained to enable subsequent motion of the work vehicle to complete the second headland pass without violation of the non-passable exterior boundary and to minimize an amount of duplicative coverage in the headland portion.

9. The computer-implemented method of claim 1, wherein virtual contours associated with the non-passable exterior boundary are predefined in an electronic map.

10. The computer-implemented method of claim 1, wherein virtual contours associated with the non-passable exterior boundary are defined according to user-provided inputs from a user interface.

11. A system (100) for guidance and/or automation for a self-propelled work vehicle (410) operating within a defined work area (300) having a non-passable exterior boundary (302), the system comprising:
one or more processors (110, 116) functionally linked to one or more sensors (126, 128, 130) associated with the work vehicle and configured to generate output signals representing vehicle motion characteristics;
the one or more processors configured to direct the performance of steps in a method according to one of claims 1 to 10.

12. A self-propelled work vehicle comprising the system of claim 11.

## Amended claims

### Amended claims in accordance with Rule 137(2) EPC.

1. A computer-implemented method (200) of guidance and/or automation for a self-propelled work vehicle (410) operating within a defined work area (300) having a non-passable exterior boundary (302), the method comprising:
generating (204, 206) an initial work plan comprising a plurality of reciprocating and adjacent infield passes (306) across an interior portion (304) of the defined work area and a plurality of circumferential and adjacent headland passes (308) about a headland portion of the defined work area which surrounds the interior portion (304);
wherein the initial work plan is generated in a manner such that the initial work plan defines a headland transition area (324) wherein the work vehicle is to transition from a first headland pass to a second headland pass adjacent to the non-passable exterior boundary, prior to performance of the first headland pass, and further wherein the initial work plan is generated in a manner such that the work vehicle is to transition from the second headland pass to the first headland pass for performance of the first headland pass upon completion of the second headland pass;
predicting (210) whether one or more violations of the non-passable exterior boundary due to crossing, intersection or impingement with respect to any portion of the defined non-passable exterior boundary (302) by the work vehicle (410) and/or a work implement (412) associated with the work vehicle (410) will occur in accordance with the initial work plan, based on at least a kinematic model (124) associated with one or more vehicle motion characteristics, wherein;
upon predicting no violations of the non-passable exterior boundary in accordance with the initial work plan, automatically generating (212) one or more output signals to direct performance of the initial work plan by the work vehicle;
upon predicting one or more violations of the non-passable exterior boundary in accordance with the initial work plan:
further automatically generating (218) an adjusted work plan including the headland transition area and further comprising:
predicting (220) at least a respective starting point (312) and an ending point (314) for each of the one or more violations;
for each of the one or more violations, generating (222) at least one reversal motion plan from the respective starting point (312) to a further defined reversal point (318), wherein the reversal point (318) is automatically ascertained to enable subsequent motion of the work vehicle to complete the second headland pass without violation of the non-passable exterior boundary and to minimize an amount of duplicative coverage in the headland portion;
for each of the one or more violations, generating a transition path (320) between the reversing point (318) and the ending point (314) with a minimized amount of duplicative coverage and corresponding overrun damage in the headland portion,
wherein the adjusted work plan is generated to include the initial work plan until the starting point (312), the reversal motion plan and the transition path (320), and automatically generating (224) one or more output signals to direct performance of the adjusted work plan by the work vehicle.

2. The computer-implemented method of claim 1, wherein the one or more output signals are generated (214, 226) at least in part to a display unit for guiding manual control of performance of the initial work plan or the adjusted work plan by the work vehicle.

3. The computer-implemented method of claim 1, wherein the one or more output signals are generated (216, 228) at least in part to one or more vehicle control units for automatic control of performance of the initial work plan or the adjusted work plan by the work vehicle.

4. The computer-implemented method of claim 3, wherein the one or more output signals are generated for guiding manual control during the at least one reversal motion plan, and for automatic control during the remaining portions of the initial work plan or the adjusted work plan.

5. The computer-implement method of claim 1, wherein the one or more vehicle motion characteristics comprise a minimum turn radius, one or more physical dimensions of the work vehicle, and a velocity of the work vehicle.

6. The computer-implement method of claim 5, wherein a work implement (412) is associated with the work vehicle, and wherein the one or more vehicle motion characteristics further comprise a minimum turn radius and one or more physical dimensions of the work implement.

7. The computer-implement method of claim 1, comprising:
iteratively training the kinematic model over time to correlate historical input data sets comprising monitored vehicle motion characteristics and boundary characteristics with observed violations of an associated boundary.

8. The computer-implemented method of claim 1, comprising:
for at least one of the one or more violations, generating another reversal motion plan from the respective ending point to a second reversal point;
wherein the second reversal point is automatically ascertained to enable subsequent motion of the work vehicle to complete the second headland pass without violation of the non-passable exterior boundary and to minimize an amount of duplicative coverage in the headland portion.

9. The computer-implemented method of claim 1, wherein virtual contours associated with the non-passable exterior boundary are predefined in an electronic map.

10. The computer-implemented method of claim 1, wherein virtual contours associated with the non-passable exterior boundary are defined according to user-provided inputs from a user interface.

11. A system (100) for guidance and/or automation for a self-propelled work vehicle (410) operating within a defined work area (300) having a non-passable exterior boundary (302), the system comprising:
one or more processors (110, 116) functionally linked to one or more sensors (126, 128, 130) associated with the work vehicle and configured to generate output signals representing vehicle motion characteristics;
the one or more processors configured to direct the performance of steps in a method according to one of claims 1 to 10.

12. A self-propelled work vehicle comprising the system of claim 11.
